# EUROPÄISCHE PATENTANMELDUNG

(11) **EP 1 312 512 A1**
(43) Veröffentlichungstag der Anmeldung: **21.05.2003**
(21) Anmeldenummer: 02025809.1
(22) Anmeldetag: 18.11.2002
(51) Int. Cl.: B60R 19/18

(54) **Kraftfahrzeug-Stossfänger und Kraftfahrzeug**

(30) Priorität: 20.11.2001 DE 10156892
(71) Anmelder: Dynamit Nobel Kunststoff GmbH, 91781 Weissenburg (DE)
(72) Erfinder: Burkhardt, Steffen, 71083 Herrenberg (DE); Preissler, Dietmar, 91781 Hagenbuch (DE); Sautner, Anton, 91757 Teuchtlingen (DE)
(74) Vertreter: Scherzberg, Andreas, Dr.

(57) **Zusammenfassung**

Die Erfindung betrifft einen Kraftfahrzeug-Stoßfänger mit einem an einer Fahrzeugkarosserie befestigbaren Stoßfänger-Innenteil (12) und einem abschnittsweise an dem Stoßfänger-Innenteil (12) befestigten Stoßfänger-Außenteil (16).

Erfindungsgemäß unterstützt das Stoßfänger-Innenteil (12) das Stoßfänger-Außenteil (16) ausschließlich im Bereich einer unterhalb einer Fahrzeugklappe (26) anzuordnenden Ladekante des Stoßfänger-Außenteils (16).

Verwendung für Leichtbau-Kraftfahrzeug-Stoßfänger.

## Beschreibung

Die Erfindung betrifft einen Kraftfahrzeug-Stoßfänger mit einem an einer Fahrzeugkarosserie befestigbaren Stoßfänger-Innenteil und einem abschnittsweise an dem Stoßfänger-Innenteil befestigten Stoßfänger-Außenteil.

Aus der deutschen Patentschrift 27 02 691 C3 ist ein Kraftfahrzeug-Stoßfänger mit einem Stoßfänger-Innenteil und einem Stoßfänger-Außenteil bekannt. Zur Befestigung des Stoßfänger-Außenteils wird dieses über das Stoßfänger-Innenteil geschoben und mittels Rastverbindungen an diesem befestigt. Das Stoßfänger-Außenteil besteht aus Kunststoff. Zur Unterstützung des Stoßfänger-Außenteils wird dieses durch das Innenteil unterhalb seiner Ober- sowie Unterkante vollflächig unterstützt. Das Stoßfänger-Innenteil ist als steifer Träger ausgebildet, der mittels energieverzehrend ausgebildeter Halterungen an einem Fahrzeug befestigt ist.

Ein aus der europäischen Patentschrift 0 430 665 B1 (Fig. 8) bekannter Kraftfahrzeug-Stoßfänger weist ein Außenteil und.ein das Außenteil stützendes Innenteil auf. Im Bereich der Oberseite des Außenteils sowie eines Abschnitts der Unterseite liegt das Außenteil vollflächig am Innenteil auf.

Mit der Erfindung soll bei einem Kraftfahrzeug-Stoßfänger eine Gewichts- und Materialersparnis erreicht werden.

Erfindungsgemäß ist hierzu ein Kraftfahrzeug-Stoßfänger mit einem an einer Fahrzeugkarosserie befestigbaren Stoßfänger-Innenteil und einem abschnittsweise an dem Stoßfänger-Innenteil befestigten Stoßfänger-Außenteil vorgesehen, bei dem das Stoßfänger-Innenteil das Stoßfänger-Außenteil ausschließlich im Bereich einer unterhalb einer Fahrzeugklappe anzuordnenden Ladekante des Stoßfänger-Außenteils unterstützt.

Lediglich im Bereich der Ladekante ist im normalen Betrieb des Fahrzeugs eine hohe Belastung des Stoßfängers zu erwarten. Indem lediglich dieser, hochbelastete Bereich unterstützt wird, kann gegenüber konventionellen Stoßfängern, deren Innenteile ein Außenteil über die gesamte Breite der Ober- bzw. der Unterseite unterstützen, eine Material- und Gewichtsersparnis erzielt werden.

In Weiterbildung der Erfindung weist das Stoßfänger-Innenteil eine Rippenstruktur auf.

Durch diese Maßnahmen kann eine sehr hohe Steifigkeit bei gleichzeitiger Gewichtsersparnis erreicht werden.

Ebenfalls vorteilhaft ist es, das Stoßfänger-Innenteil-mit Materialaussparungen zu versehen.

Auf diese Weise können Material und Gewicht eingespart werden, ohne die Steifigkeit des Innenteils zu beeinträchtigen.

In Weiterbildung der Erfindung verläuft das Stoßfänger-Innenteil ausgehend von ersten Befestigungsmitteln zur Befestigung der Fahrzeugkarosserie in Richtung auf die Ladekante zu im wesentlichen entlang der Fahrzeugkarosserie und weist unterhalb des Bereichs der Ladekante wenigstens einen balkonartigen Vorsprung auf, der sich in Fahrzeuglängsrichtung erstreckt.

Durch diese Maßnahmen kann unterhalb des Balkons Raum für eine plastische Verformung des Stoßfänger-Außenteils sowie eventuelle energieabsorbierende Bauteile geschaffen werden. Darüber hinaus können in den unterhalb des Balkons zur Verfügung stehenden Bauraum zusätzliche Bauteile wie Sensoren, Antennen oder dergleichen angeordnet werden. Dennoch wird der Bereich der Ladekante unterstützt. Eine weitere Material- und Gewichtsersparnis kann durch in Fahrzeugquerrichtung nebeneinander angeordnete Balkone erreicht werden.

In Weiterbildung der Erfindung weist das Stoßfänger-Innenteil eine in Fahrzeugquerrichtung verlaufende Klemmleiste auf, in die eine der Fahrzeugkarosserie zugewandte Kante des Stoßfänger-Außenteils eingeklemmt ist. Vorteilhafterweise ist die Klemmleiste mit in Fahrzeuglängsrichtung verlaufenden und im wesentlichen senkrecht zur Fahrzeugquerrichtung angeordneten Klemmrippen versehen.

Durch diese Maßnahmen kann eine gegebenenfalls mit einer Rastvorrichtung versehene Kante des Stoßfänger-Auß.enteils festgehalten werden. Mittels der Klemmrippen wird ein sicherer Klemmsitz sowie eine Materialersparnis gegenüber einer vollflächigen Klemmleiste erreicht. Zur Einstellung des Klemmsitzes können Klemmrippen leichter angepasst werden als eine vollflächige Rampe oder Leiste. Dies ist insbesondere dann vorteilhaft, wenn die Klemmleiste aus Kunststoffspritzguss besteht und ein Spritzwerkzeug angepasst werden soll.

Das der Erfindung zugrundeliegende Problem wird auch durch ein Kraftfahrzeug mit einem erfindungsgemäßen Stoßfänger gelöst, bei dem unterhalb des Stoßfänger-Innenteils ein Verformungskörper an der Fahrzeugkarosserie befestigt und von dem Stoßfänger-Außenteil abgedeckt ist.

Eine solche Aufteilung in Verformungskörper und Innenteil erlaubt für Innenteil und Verformungskörper eine an die Funktion angepasste Materialauswahl. Beispielsweise kann das Innenteil aus Kunststoffspritzguss bestehen, wohingegen der Verformungskörper aus Aluminium aufgebaut ist.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen. In den Zeichnungen zeigen:
- Fig. 1: eine abschnittsweise Schnittansicht eines an einem Kraftfahrzeug angebrachten erfindungsgemäßen Stoßfängers,
- Fig. 2: eine weitere Schnittansicht des Stoßfängers der Fig. 1,
- Fig. 3: eine perspektivische Ansicht des Stoßfänger-Innenteils der Fig. 1 und
- Fig. 4: eine weitere perspektivische Ansicht des Stoßfänger-Innenteils der Fig. 1.

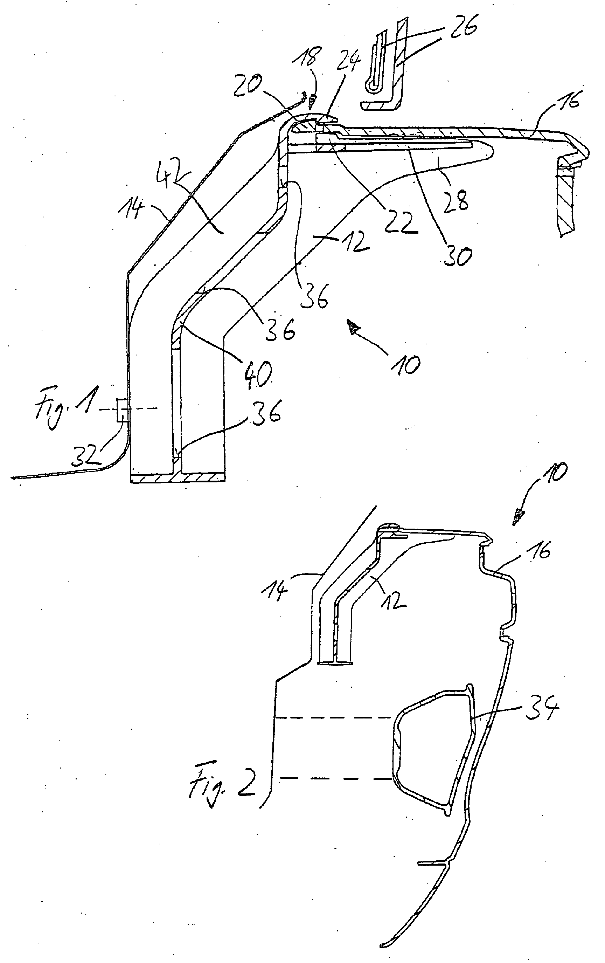

In der Schnittansicht der Fig. 1 ist abschnittsweise ein erfindungsgemäßer Kraftfahrzeug-Stoßfänger 10 dargestellt, der ein Stoßfänger-Innenteil 12 aufweist, das an einer Fahrzeugkarosserie 14 befestigt ist. Ein Stoßfänger-Außenteil 16 ist lediglich abschnittsweise dargestellt und an dem Stoßfänger-Innenteil 12 dadurch befestigt, dass eine der Fahrzeugkarosserie 14 zugewandte Kante des Stoßfänger-Außenteils 16 in eine Klemmleiste 18 des Stoßfänger-Innenteils eingeschoben ist. Die Klemmleiste 18 des Stoßfänger-Innenteils 12 weist eine Hinterschneidung auf, in die ein federnd am Stoßfänger-Außenteil angeordneter Rastvorsprung 20 eingreift. Eine Ausnehmung der Klemmleiste 18 zum Aufnehmen der Kante des Stoßfänger-Außenteils wird an ihrer Unterseite durch parallel zur Fahrzeuglängsrichtung und senkrecht zur Fahrzeugquerrichtung angeordnete Klemmrippen 22 begrenzt, von denen in der Fig. 1 lediglich eine zu erkennen ist. Gegenüber den Klemmrippen 22 bildet ein leistenförmiger Vorsprung 24 die in der Fig. 1 oben liegende Begrenzung der Ausnehmung der Klemmleiste 18. Der leistenförmige Vorsprung 24 weist die Hinterschneidung für das Eingreifen der Rastnase 20 des Stoßfänger-Außenteils auf.

Beim Einführen der Vorderkante des Stoßfänger-Außenteils 16 in die Klemmleiste 18 wird diese zunächst von den Klemmrippen 22 geführt, bis sie zwischen den Klemmrippen 22 und dem leistenförmigen Vorsprung 24 aufgenommen wird. Bei weiterem Einschieben des Stoßfänger-Außenteils 16 schnappt dann die Rastnase 20 in die Hinterschneidung des leistenförmigen Vorsprungs 24 ein und darüber hinaus wird das Stoßfänger-Außenteil 16 zwischen den Klemmrippen 22 und den leistenförmigen Vorsprung 24 eingeklemmt.

Der in der Fig. 1 dargestellte, horizontal verlaufende Abschnitt des Stoßfänger-Außenteils 16 bildet den Bereich einer Ladekante, der unterhalb einer lediglich angedeuteten Fahrzeugklappe 26 angeordnet ist. Beim Beladen eines Kraftfahrzeugs wird dieser Ladekantenbereich belastet, beispielsweise dann, wenn Ladegut auf dem Ladekantenbereich abgestellt wird. Zur Stabilisierung des Ladekantenbereichs weist das Stoßfänger-Innenteil 11 einen balkonartigen Vorsprung 28 auf, der sich in Fahrzeuglängsrichtung unterhalb des Bereichs der Ladekante erstreckt. Der Vorsprung 28 besteht aus einer parallel.zur Fahrzeuglängsrichtung sowie senkrecht zur Fahrzeugquerrichtung angeordneten Rippe, die mit einer senkrechten Versteifungsrippe 30 versehen ist. Oberhalb der Versteifungsrippe 30 geht der Vorsprung 28 in die Klemmrippe 22 über.

Das Stoßfänger-Innenteil ist mit einem lediglich schematisch angedeuteten Befestigungsbolzen 32 mit der Fahrzeugkarosserie 14 verbunden. Ausgehend von dem Befestigungsbolzen 32 erstreckt sich das Stoßfänger-Innenteil 12 entlang der Fahrzeugkarosserie 14, um dann im Bereich der Ladekante sich von der Fahrzeugkarosserie 14 weg unter den Ladenkantenbereich des Stoßfänger-Außenteils 16 zu erstrecken. Dadurch wird zwischen dem Stoßfänger-Außenteil 16 und der Fahrzeugkarosserie 14 ein Verformungsraum geschaffen, der für den Energieabbau während eines Fahrzeugaufpralls genutzt werden kann.

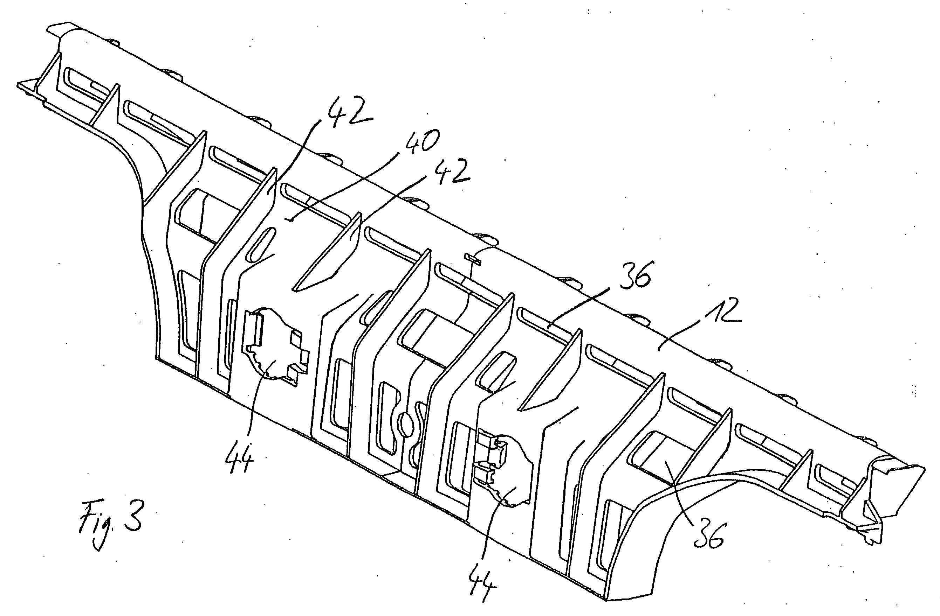

Wie in der Fig. 2 dargestellt ist, ist innerhalb dieses Raums zwischen Stoßfänger-Außenteil 16 und Fahrzeugkarosserie 14 ein Verformungskörper 34 angeordnet. Der Verformungskörper 34 besteht aus einem Aluminiumhohlprofil und ist mittels lediglich gestrichelt angedeuteter Halter mit der Fahrzeugkarosserie 14 verbunden. Durch die Trennung von Verformungskörper 34, dem energieabsorbierenden Hohlprofil; und Stoßfänger 10 kann dieser Toleranzen der Fahrzeugkarosserie 14 besser ausgleichen, da keine Versteifung des Stoßfängers 10 durch das Hohlprofil erfolgt.

In der Fig. 1 ist die verrippte Struktur des Stoßfänger-Innenteils 12 zu erkennen, das durch senkrecht zueinander angeordnete flächige Bauteile, beispielsweise den Vorsprung 28 und die Rippe 30, eine hohe Steifigkeit aufweist. Zur Gewichts- und Materialersparnis sind die Flächen teilweise mit Aussparungen 36 versehen.

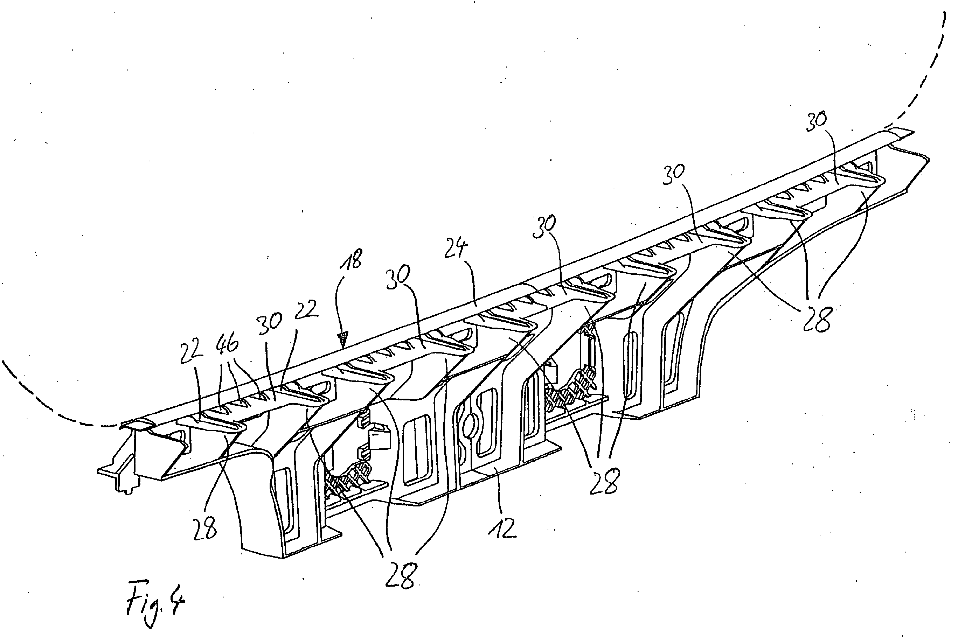

Eine perspektivische Ansicht des Stoßfänger-Innenteils 12, von der Fahrzeugkarosserie aus gesehen, ist in der Fig. 3 dargestellt. Gut zu erkennen ist die Rippenstruktur des Stoßfänger-Innenteils mit einer gebogenen Platte 40 und senkrecht zu dieser angeordneten Rippen 42. Die Platte 40 ist mit zahlreichen Aussparungen 36 versehen. Ebenfalls zu erkennen sind zwei Aussparungen 44 mit Rasthaken, die zum Aufnehmen von Platten mit Befestigungsbolzen zur Befestigung des Stoßfänger-Innenteils 12 an der Fahrzeugkarosserie vorgesehen sind. Das Stoßfänger-Innenteil 12 erstreckt sich in Fahrzeugquerrichtung lediglich über die Breite der Ladekante. Das Stoßfänger-Außenteil wird dadurch nur lokal unterstützt, so dass das Stoßfänger-Innenteil 12 gegenüber konventionellen Stoßfänger-Innenteilen wesentlich kleiner und leichter ausgeführt werden kann.

Die perspektivische Darstellung der Fig. 4 zeigt das Stoßfänger-Innenteil 12 von der Seite des Stoßfänger-Außenteils aus gesehen. Gut zu erkennen sind die balkonartigen Vorsprünge 28 zur Unterstützung des Bereichs der Ladekante des Stoßfänger-Außenteils. Über die Breite der Ladekante in Fahrzeugquerrichtung sind insgesamt zehn Vorsprünge 28 angeordnet, die jeweils paarweise zusammengefasst sind. Zwei Vorsprünge 28 eines Paars sind mittels einer der Rippen 30 miteinander verbunden. Dadurch bilden jeweils zwei balkonartige Vorsprünge 28 in Z-Richtung, d.h. in der Fahrzeughochrichtung, einen äußerst stabilen Verbund und sind in X-Richtung, d.h. in der Fahrzeuglängsrichtung, dennoch energieabsorbierend verformbar. Auf der Rippe 30 ist im Bereich eines jeweiligen balkonartigen Vorsprungs 28 jeweils eine Klemmrippe 22 angeordnet, die sich von der Klemmleiste 18 aus bis in den Endbereich des Vorsprungs 28 erstreckt. Darüber hinaus sind auf der Rippe 30 kürzere Klemmrippen 46 parallel zu den Klemmrippen 22 angeordnet. Während die Klemmrippen 22 in ihrem vorderen, im Bereich des balkonartigen Vorsprungs 28 liegenden Bereich zum Einführen einer Kante des Stoßfänger-Außenteils in die Klemmleiste 18 vorgesehen sind, dient der unterhalb des Vorsprungs 24 der Klemmleiste liegende Abschnitt der Klemmrippen 22 sowie die ebenfalls unterhalb des Vorsprungs 24 liegenden Klemmrippen 46 dazu, die Kante des Stoßfänger-Außenteils fest in der Klemmleiste 18 einzuklemmen.

Wie ausgeführt wurde, unterstützt das Stoßfänger-Innenteil 12 das Stoßfänger-Außenteil lediglich im Bereich der Ladekante. Wie in der Fig. 4 angedeutet ist, endet das Stoßfänger-Innenteil 12 in Fahrzeugquerrichtung in dem Bereich des Stoßfänger-Außenteils, in dem die Ladekante in einen nach oben gekrümmten Bereich übergeht. Die Unterstützung der Ladekante durch das Stoßfänger-Innenteil 12 endet somit in einem Bereich, in welchem im täglichen Betrieb keine Belastungen mehr auf den Stoßfänger aufgebracht werden bzw. in welchem das Stoßfänger-Außenteil durch seine Form bedingt eine ausreichende. Eigensteifigkeit aufweist. Die rechts und links des Ladekantenbereichs anschließenden, nach oben gekrümmten Bereiche sind in der Fig. 4 gestrichelt angedeutet und markieren die Kontur einer oberhalb des Ladekantenbereichs angeordneten Fahrzeugklappe.

## Patentansprüche

1. Kraftfahrzeug-Stoßfänger mit einem an einer Fahrzeugkarosserie befestigbaren Stoßfänger-Innenteil (12) und einem abschnittsweise an dem Stoßfänger-Innenteil (12) befestigten Stoßfänger-Außenteil (16),
**dadurch gekennzeichnet, dass**
das Stoßfänger-Innenteil (12) das Stoßfänger-Außenteil (16) ausschließlich im Bereich einer unterhalb einer Fahrzeugklappe (26) anzuordnenden Ladekante des Stoßfänger-Außenteils (16) unterstützt.

2. Kraftfahrzeug-Stoßfänger nach Anspruch 1,
**dadurch gekennzeichnet, dass**
das Stoßfänger-Innenteil (12) eine Rippenstruktur (40, 42) aufweist.

3. Kraftfahrzeug-Stoßfänger nach Anspruch 1 oder 2,
**dadurch gekennzeichnet, dass**
das Stoßfänger-Innenteil (12) mit Materialaussparungen (36) versehen ist.

4. Kraftfahrzeug-Stoßfänger nach einem der vorstehenden Ansprüche,
**dadurch gekennzeichnet, dass**
das Stoßfänger-Innenteil (12) ausgehend von ersten Befestigungsmitteln (32) zur Befestigung an der Fahrzeugkarosserie (14) in Richtung auf die Ladekante im wesentlichen entlang der Fahrzeugkarosserie (14) verläuft und unterhalb des Bereichs der Ladekante wenigstens einen balkonartigen Vorsprung (28) aufweist, der sich in Fahrzeuglängsrichtung erstreckt.

5. Kraftfahrzeug-Stoßfänger nach einem der vorstehenden Ansprüche,
**dadurch gekennzeichnet, dass**
das Stoßfänger-Innenteil eine in Fahrzeugquerrichtung verlaufende Klemmleiste (18) aufweist, in die eine der Fahrzeugkarosserie (14) zugewandte Kante des Stoßfänger-Außenteils (16) eingeklemmt ist.

6. Kraftfahrzeug-Stoßfänger nach Anspruch 5,
**dadurch gekennzeichnet, dass**
die Klemmleiste (18) mit in Fahrzeuglängsrichtung verlaufenden und im wesentlichen senkrecht zur Fahrzeugquerrichtung angeordneten Klemmrippen (22, 46) versehen ist.

7. Kraftfahrzeug mit Stoßfänger nach einem der vorstehenden Ansprüche,
**dadurch gekennzeichnet, dass**
unterhalb des Stoßfänger-Innenteils (12) ein Verformungskörper (34) an der Fahrzeugkarosserie (14) befestigt und von dem Stoßfänger-Außenteil (16) abgedeckt ist.
